# EUROPÄISCHE PATENTSCHRIFT

(11) **EP 0 836 632 B1**
(45) Veröffentlichungstag und Bekanntmachung des Hinweises auf die Patenterteilung: **29.09.1999**
(21) Anmeldenummer: 96924851.7
(22) Anmeldetag: 02.07.1996
(51) Int. Cl.: C08K 5/15, C08L 33/22, C08L 25/12

(54) **THERMOPLASTISCHE FORMMASSEN SOWIE EIN VERFAHREN ZUR REDUZIERUNG DER BILDUNG VON RESTMONOMEREN IN DIESEN FORMMASSEN**
THERMOPLASTIC MOLDING COMPOUNDS AND A METHOD OF REDUCING THE FORMATION OF RESIDUAL MONOMERS IN THESE MOLDING COMPOUNDS
MATIERES DE MOULAGE THERMOPLASTIQUES ET PROCEDE DE REDUCTION DE LA FORMATION DE MONOMERES RESIDUELS DANS LESDITES MATIERES DE MOULAGE

(30) Priorität: 03.07.1995 DE 19524178
(43) Veröffentlichungstag der Anmeldung: 22.04.1998
(73) Patentinhaber: BASF AKTIENGESELLSCHAFT, 67056 Ludwigshafen (DE)
(72) Erfinder: TICKTIN, Anton, D-68199 Mannheim (DE); McKEE, Graham, Edmund, D-67433 Neustadt (DE); FISCHER, Wolfgang, D-67067 Ludwigshafen (DE); GUNESIN, Binnur, Ch-2000 Neuchâtel (CH); GÜNTHERBERG, Norbert, D-67346 Speyer (DE)
(74) Vertreter: Isenbruck, Günter, Dr.
(86) Internationale Anmeldenummer: EP9602896
(87) Internationale Veröffentlichungsnummer: WO9702314

(56) Entgegenhaltungen:
- EP-A- 0 263 524
- EP-A- 0 384 472
- WO-A-90/07547
- WO-A-95/23182
- DE-A- 4 405 670
- Kunststoff-Additive, Gächter-Müller, 3.Ausgabe, 1989, Seite 76.

## Beschreibung

Die Erfindung betrifft thermoplastische Formmassen und insbesondere ein Verfahren zur Reduzierung der Bildung von Restmonomeren bei thermischer Belastung und Scherung der Formmassen.

WO 90/07547 offenbart Stabilisatorgemische aus α-Tocopherol (Vitamin E) und Glycerinmono-, -di- und/oder -triestern von gesättigten oder ungesättigten Fettsäuren zur Stabilisierung von Thermoplasten, wie Polyvinylchlorid, Styrolpolymerisate, Polyamide, Polycarbonat, Polyester und Polyolefine.

J5 6028-228 und J5 0110-442 beschreiben die Stabilisierung von u. a. Polyethylen, Polypropylen sowie von PVC mit α-Tocopherol. J5 4055-043 und J6 3137-941-A nennen als Stabilisator für Polyolefine Vitamin E und eine Verbindung vom Phosphit- bzw. Phosphonittyp. Weiter offenbart J5 8002-337 ein Verfahren zur Verhinderung der Bildung krebserzeugender Nitrosamine bei natürlichem oder synthetischem Kautschuk, indem diesen u. a. Vitamin E einverleibt wird.

EP-A-0 384 472 offenbart eine Zusammensetzung aus einem thermoplastischen Kunststoff, einem Lichtschutzmaterial und Vitamin E als Verpackungsmaterial für lichtempfindliche Materialien, wobei als thermoplastischer Kunststoff u. a. ABS erwähnt wird.

In DE-A-44 05 670 (WO 95/23182) sind Stabilisatorgemische zur Stabilisierung von Polymeren gegen die Einwirkung von Licht, Sauerstoff und vor allem Wärme beschrieben. Geeignete Polymere sind dabei unter anderem Styrol-Acrylnitril (SAN), Styrol-Acrylnitril-Methacrylat, Acrylnitril-Butadien-Styrol (ABS) und Polyacrylnitrile. Als eine Stabilisatorkomponente kommen alpha-Tocopherole in Betracht. Daneben liegen Phosphite oder Phosphonite und Amine vor. Das Verhältnis von Tocopherol zu Phosphiten beziehungsweise Phosphoniten beträgt dabei 1 : 5 bis 1 : 14, vorzugsweise 1 : 6 bis 1 : 10. Amine liegen in geringen Mengen vor. Das Gemisch wird in einer Konzentration von 0,05 bis 5 Gew.-%, bezogen auf das Polymer, eingesetzt.

Acrylnitrilhaltige Polymere neigen, insbesondere bei thermischer Belastung oder Scherung, zur Bildung von Acrylnitrilmonomeren. Dies stellt ein Problem dar, da Acrylnitril als krebserregend nach Gruppe IIIA2 eingestuft wird (vgl. Acrylnitril, Merkblatt M 016, 11/90, Herausgeber: die Berufsgenossenschaft der Chemischen Industrie).

Deshalb bestand die Aufgabe der vorliegenden Erfindung darin, Formmassen aus acrylnitrilhaltigen Polymerer zu entwickeln, bei denen die Bildung von Restmonomeren bei der thermischen Belastung und Scherung reduziert wird.

Überraschenderweise wurde gefunden, daß sich dieses technische Problem durch eine thermoplastische Formmasse aus acrylnitrilhaltigen Polymeren und α-Tocopherol lösen läßt. Insbesondere wurde gefunden, daß sich die Bildung von Restmonomeren reduzieren läßt, wenn die thermische Belastung acrylnitrilhaltiger Polymerer in Gegenwart von α-Tocopherol stattfindet.

Somit betrifft die vorliegende Erfindung thermoplastische Formmassen, enthaltend als wesentliche komponenten
A) 98 - 99,995 Gew.-%, bezogen auf A + B, mindestens eines acrylnitrilhaltigen Polymeren,
und
B) 0,005 - 2 Gew.-%, bezogen auf A + B, α-Tocopherol
und ggf. enthaltend
C) übliche Zusatzstoffe in wirksamen Mengen,
die keine Lichtschutzmittel und Amine enthalten. Weiterhin betrifft die Erfindung ein Verfahren zur Reduzierung der Bildung von Restmonomeren bei thermischer Belastung und Scherung der Formmassen, das sich dadurch auszeichnet, daß vor, während oder nach der Polymerisation, aber vor der thermischen Belastung oder Scherung 0,005 - 2 Gew.-%, bezogen auf A + B, α-Tocopherol zugesetzt wird und danach die Formmassen thermisch belastet und geschert werden. Weiterhin betrifft die Erfindung die Verwendung der erfindungsgemäßen Formmassen zur Herstellung von Formteilen sowie diese Formteile. Die Erfindungsgegenstände sowie bevorzugte Ausführungsformen davon sind in den Ansprüchen definiert.

Bei der Komponente A handelt es sich um ein acrylnitrilhaltiges Polymeres, bevorzugt Polyacrylnitril, ein Acrylnitril-Styrol-Copolymeres oder ein Copolymeres aus Acrylnitril-Styrolderivaten oder aus Acrylnitril und Methylmethacrylat. Beispiele für geeignete Styrolderivate sind kernsubstituierte Styrole sowie die an der Doppelbindung substituierten Styrole, wie z. B. α-Methylstyrol. Am meisten bevorzugt ist ein α-Methylstyrol-Acrylnitril-Copolymeres.

In einer bevorzugten Ausführungsform enthalten die acrylnitrilhaltigen Polymere andere Polymere, wie z. B. Kautschuke, wie Polybutadien oder Polybutylacrylate, die auch mit anderen Monomeren gepfropft werden können, z. B. mit Polystyrolacrylnitril. Weiterhin können die acrylnitrilhaltigen Polymere mit Polycarbonat vermischt werden.

Die erfindungsgemäßen Formmassen enthalten 98 - 99,995, bevorzugt 98,5 - 99,9, besonders bevorzugt 99,5 - 99,93, jeweils Gew.-% bezogen auf A + B, des acrylnitrilhaltigen Polymeren.

Als Komponente B wird α-Tocopherol verwendet.

Die Menge an Komponente B beträgt 0,005 - 2, bevorzugt 0,01 - 1,5, besonders bevorzugt 0,02 - 0,5, jeweils in Gew.-%, bezogen auf A + B. In einer bevorzugten Ausführungsform wird die Komponente B vor oder während der Herstellung des acrylnitrilhaltigen Polymeren zugesetzt. In einer anderen bevorzugten Ausführungsform wird die Komponente B nach der Polymerisation den acrylnitrilhaltigen Polymeren bzw. den erfindungsgemäßen Formmassen vor der thermischen Belastung und Scherung zugesetzt, so daß die thermische Belastung und Scherung in Gegenwart der Komponente B stattfindet. Im letzteren Fall kann die Zugabe der Komponente B zu dem Polymeren durch Abmischen in der Polymerschmelze, z. B. in einem Extruder, erfolgen.

Als Komponente C können die erfindungsgemäßen Formmassen Zusatzstoffe enthalten, wie sie für acrylnitrilhaltige Polymere üblich und gebräuchlich sind. Als solche Zusätze eignen sich Additive wie Farbe, Schmiermittel und Füllstoffe, soweit sie keine Amine sind oder als Lichtschutzmittel wirken. Die Zusatzstoffe werden in üblichen Mengen, vorzugsweise in Mengen von 0,1 bis zu insgesamt 30 Gew.-%, bezogen auf A + B, eingesetzt.

Die vorliegende Erfindung bietet neben der Unterdrückung der Bildung von Acrylnitrilmonomeren sowie anderen Monomeren den Vorteil, daß die Verwendung von α-Tocopherol auch zu einer wesentlich helleren Produktfarbe führt.

Die erfindungsgemäßen Formmassen eignen sich zur Herstellung von Formteilen, insbesondere im elektrotechnischen Bereich, für Haushaltswaren, im Sanitärbereich und zur Herstellung von Spielwaren, Auch eine Anwendung in der Automobilindustrie ist vorteilhaft möglich.

Die Erfindung wird anhand der folgenden Beispiele veranschaulicht, die bevorzugte Ausführungsformen der Erfindung darstellen.

Bei den folgenden Versuchen wurden die Restmonomergehalte der Polymeren in 1,4-Dioxan als Lösungsmittel mit einem Hewlett Packard 5890 Gas Chromatograph mit einer DB Wachs Kapillar Säule (Ultra 20 Säule) bestimmt. Die Retentionszeiten und die GC-Faktoren des Flammenionisationsdetektors wurden mit Eichlösungen in 1,4-Dioxan kalibriert. Die untere Bestimmungsgrenze lag bei 0,5 bis 2,0 ppm.

Die Restmonomergehalte der Polymermassen der folgenden Beispiele 1 bis 9 sind in der untenstehenden Tabelle wiedergegeben.

### I. Zugabe des α-Tocopherols vor der Polymerisation

### Beispiel 1 (Vergleich)

57,8 Gewichtsteile α-Methylstyrol und 34,0 Gewichtsteile Acrylnitril wurden mit 0,076 Gewichtsteilen Azobisisobutyronitril in 8,2 Gewichtsteilen Ethylbenzol bei 110°C polymerisiert.

Bei 51 Gew.-% Umsatz wurde das Polymere in einem Extruder entgast, als Strang ausgepreßt und anschließend granuliert. Die maximale Temperatur betrug bei diesem Vorgang 250°C.

### Beispiel 2 (Erfindung)

Versuch 1 wurde wiederholt, wobei aber vor Beginn der Polymerisation 0,05 Gew.-% α-Tocopherol, bezogen auf α-Tocopherol und die Monomeren α-Methylstyrol und Acrylnitril, dem Reaktionsgemisch zugegeben wurde.

### II. Zugabe des α-Tocopherols zu den Polymeren

### Beispiel 3 (Vergleich)

Ein α-Methylstyrol-Acrylnitril(70:30)-Copolymeres mit einer Viskositätszahl von 56 ml/g (gemessen 0,5%ig in DMF bei 23°C) wurde in einem Haake Doppelschnecken-Extruder bei 260°C und 140 upm extrudiert. Der Durchsatz betrug 1 kg/h.

### Beispiel 4 (Vergleich)

Versuch 3 wurde wiederholt, wobei jedoch vor der Extrusion das Copolymere mit 0,1 Gew.-%, bezogen auf Copolymeres + Stabilisator, Irganox 1010 Stabilisator (Fa. Ciba Geigy), einem gängigen Stabilisator für Thermoplasten, vermischt wurde.

### Beispiel 5 (Erfindung)

Versuch 4 wurde wiederholt, wobei jedoch statt Irganox 1010 0,05 Gew.-% α-Tocopherol, bezogen auf Copolymeres + α-Tocopherol, zugegeben wurde.

### Beispiel 6 (Vergleich)

Beispiel 3 wurde wiederholt, wobei jedoch die Temperatur im Extruder 300°C statt 260°C betrug.

### Beispiel 7 (Erfindung)

Beispiel 6 wurde wiederholt, wobei jedoch vor der Extrusion das Copolymere mit 0,05 Gew.-% α-Tocopherol, bezogen auf Copolymeres + α-Tocopherol, vermischt wurde.

### Beispiel 8 (Vergleich)

Ein ABS-Polymeres aus 29 Gewichtsteilen Polybutadienpropfkautschuk, hergestellt nach der Lehre von EP-A-062 901, und aus 71 Gewichtsteilen eines Polystyrol-Acrylnitril-Copolymeren mit 35 Gew.-% Acrylnitril und einer Viskositätszahl von 80 ml/g (gemessen 0,5%ig in DMF bei 23°C) wurde in einem ZSK 30 Extruder der Fa. Werner und Pfleiderer bei 100 upm und 260°C extrudiert. Der Durchsatz betrug 10 kg/h.

### Beispiel 9 (Erfindung)

Beispiel 8 wurde wiederholt, wobei jedoch vor der Extrusion das Copolymere mit 0,05 Gew.-% α-Tocopherol, bezogen auf Copolymeres + α-Tocopherol, abgemischt wurde.

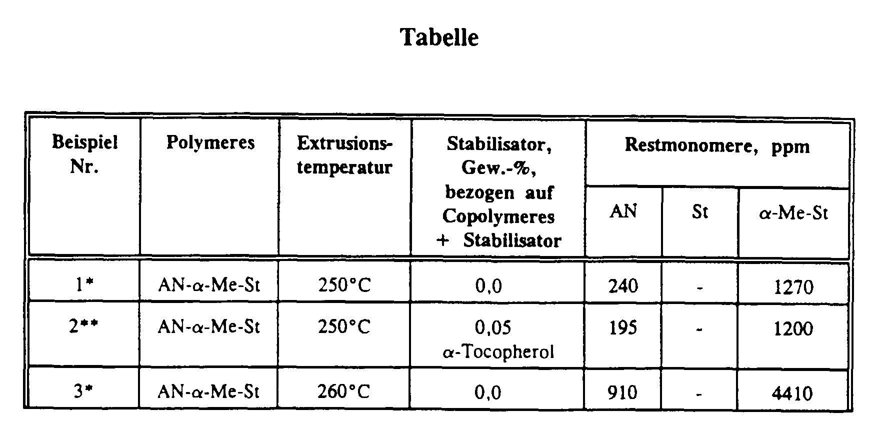

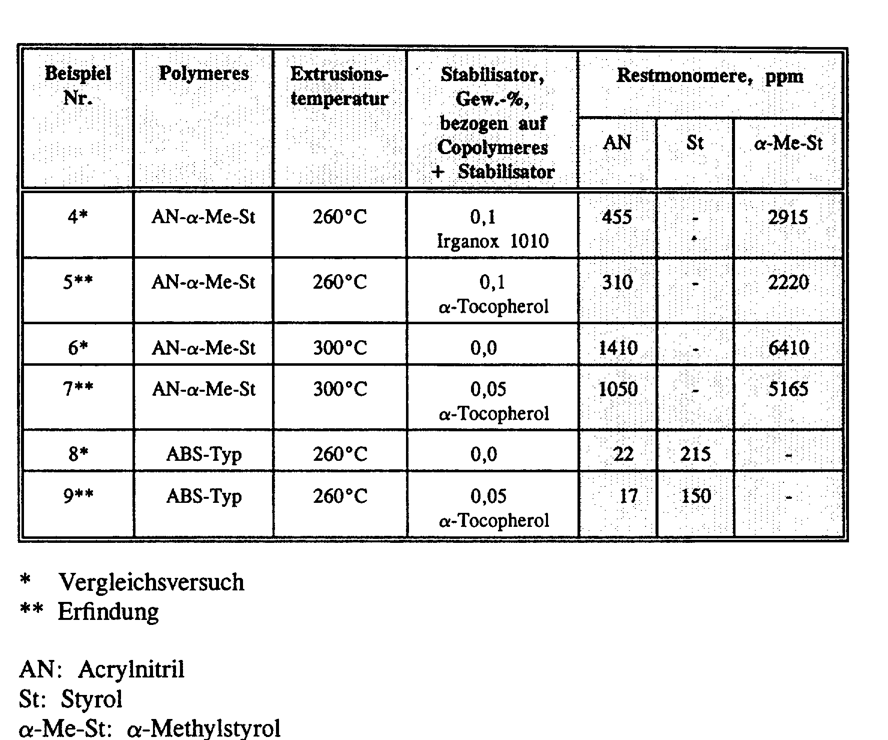

Der Tabelle ist zu entnehmen, daß bei den erfindungsgemäßen Versuchen, bei denen dem acrylnitrilhaltigen Polymeren vor der Polymerisation oder zum Polymeren α-Tocopherol zugegeben wurde, bei thermischer Belastung und Scherung ein niedrigerer Gehalt an Restmonomeren gemessen wurde als bei den Vergleichsversuchen, bei denen entweder kein oder ein handelsüblicher Stabilisator (Irganox 1010) zugesetzt wurde. Somit unterdrückt der Zusatz von α-Tocopherol die Bildung von Restmonomeren bei thermischer Belastung und Scherung des Polymeren.

## Patentansprüche

1. Verfahren zur Reduzierung der Bildung von Restmonomeren bei thermischer Belastung und Scherung von thermoplastischen Formmassen, enthaltend als wesentliche Komponenten
A) 98 bis 99,995 Gew.-%, bezogen auf A + B, mindestens eines acrylnitrilhaltigen Polymeren,
und
B) 0,005 bis 2 Gew.-%, bezogen auf A + B, α-Tocopherol,
und gegebenenfalls enthaltend
C) übliche Zusatzstoffe in wirksamen Mengen,
die keine Lichtschutzmittel und Amine enthalten,
bei dem vor, während oder nach der Polymerisation der acrylnitrilhaltigen Polymeren vor der thermischen Belastung und Scherung der Formmassen 0,005 bis 2 Gew.-%, bezogen auf A + B, α-Tocopherol zugesetzt wird und danach die Formmassen thermisch belastet und geschert werden.

2. Thermoplastische Formmasse, enthaltend als wesentliche Komponenten
A) 98 bis 99,995 Gew.-%, bezogen auf A + B, mindestens eines acrylnitrilhaltigen Polymeren,
und
B) 0,005 bis 2 Gew.-%, bezogen auf A + B, α-Tocopherol,
und gegebenenfalls enthaltend
C) übliche Zusatzstoffe in wirksamen Mengen,
die keine Lichtschutzmittel und Amine enthält.

3. Formmasse nach Anspruch 2, dadurch gekennzeichnet, daß das acrylnitrilhaltige Polymere Polyacrylnitril, ein Acrylnitril-Styrol-Copolymeres, ein Copolymeres aus Acrylnitril-Styrolderivaten, bevorzugt kernsubstituierten Styrolen oder an der Doppelbindung substituierten Styrolen, oder ein Copolymeres aus Acrylnitril und Methylmethacrylat ist.

4. Formmasse nach Anspruch 2 oder 3, dadurch gekennzeichnet, daß das acrylonitrilhaltige Polymere ein α-Methylstyrol-Acrylnitril-Copolymeres ist.

5. Verwendung der Formmasse nach einem der Ansprüche 2 bis 4 zur Herstellung von Formteilen.

6. Formteile aus den Formmassen nach einem der Ansprüche 2 bis 4.

## Claims

1. A method for reducing the formation of residual monomers on thermal stress and shearing of thermoplastic molding compositions comprising as essential components
A) 98 to 99.995% by weight, based on A + B, of at least one acrylonitrile-containing polymer,
and
B) 0.005 to 2% by weight, based on A + B, of α-tocopherol
with or without
C) conventional additives in effective amounts, which comprise no light stabilizers and amines,
in which 0.005 to 2% by weight, based on A + B, of α-tocopherol is added before, during or after the polymerization of the acrylonitrile-containing polymers and before the thermal stress and shearing of the molding compositions and the molding compositions are then thermally stressed and sheared.

2. A thermoplastic molding composition comprising as essential components
A) 98 to 99.995% by weight, based on A + B, of at least one acrylonitrile-containing polymer,
and
B) 0.005 to 2% by weight, based on A + B, of α-tocopherol
with or without
C) conventional additives in effective amounts,
which comprises no light stabilizers and amines.

3. A molding composition as claimed in claim 2, wherein the acrylonitrile-containing polymer is polyacrylonitrile, an acrylonitrile/styrene copolymer, a copolymer of acrylonitrile/styrene derivatives, preferably nuclear-substituted styrenes or styrenes substituted on the double bond, or a copolymer of acrylonitrile and methyl methacrylate.

4. A molding composition as claimed in claim 2 or 3, wherein the acrylonitrile-containing polymer is an α-methylstyrene/acrylonitrile copolymer.

5. The use of the molding composition as claimed in any of claims 2 to 4 for producing moldings.

6. A molding made from the molding compositions as claimed in any of claims 2 to 4.

## Revendications

1. Procédé de réduction de la formation de monomères résiduels lors d'une sollicitation thermique et d'un cisaillement de masses de moulage thermoplastiques, contenant comme composants essentiels
A) 98 à 99,995% en poids, par rapport à A + B, d'au moins un polymère contenant de l'acrylonitrile,
et
B) 0,005 à 2% en poids, par rapport à A + B, d'α-tocophérol, et contenant éventuellement
C) des additifs courants en des quantités actives, qui ne comportent pas d'agents de protection contre la lumière et des amines,
procédé dans lequel avant, pendant ou après la polymérisation des polymères contenant de l'acrylonitrile, on ajoute, avant la sollicitation thermique et le cisaillement des masses de moulage, 0,005 à 2% en poids, par rapport à A + B, d'α-tocophérol et ensuite on soumet les masses de moulage à une sollicitation thermique et à un cisaillement.

2. Masse de moulage thermoplastique, contenant comme composants essentiels
A) 98 à 99,995% en poids, par rapport à A + B, d'au moins un polymère contenant de l'acrylonitrile,
et
B) 0,005 à 2% en poids, par rapport à A + B, d'α-tocophérol, et contenant éventuellement
C) des additifs courants en quantités actives,
qui ne comporte pas d'agents de protection contre la lumière et d'amines.

3. Masse de moulage suivant la revendication 2, caractérisée en ce que le polymère contenant de l'acrylonitrile est du polyacrylonitrile, un copolymère d'acrylonitrile-styrène, un copolymère d'acrylonitrile-dérivé de styrène, de préférence des styrènes substitués sur le noyau ou des styrènes substitués sur la double liaison, ou un copolymère d'acrylonitrile et de méthacrylate de méthyle.

4. Masse de moulage suivant l'une des revendications 2 et 3, caractérisée en ce que le polymère contenant de l'acrylonitrile est un copolymère d'α-méthylstyrène-acrylonitrile.

5. Utilisation de la masse de moulage suivant l'une des revendications 2 à 4, pour la fabrication de pièces façonnées.

6. Pièces façonnées à base des masses de moulage suivant l'une des revendications 2 à 4.
